# EUROPÄISCHE PATENTANMELDUNG

(11) **EP 2 995 775 A1**
(43) Veröffentlichungstag der Anmeldung: **16.03.2016**
(21) Anmeldenummer: 14184764.0
(22) Anmeldetag: 15.09.2014
(51) Int. Cl.: F01D 5/30, F01D 9/04, F15B 11/12, H02N 2/02

(54) **Vorrichtung zum Eintreiben einer Leitschaufel in eine Schaufelnut**

(71) Anmelder: Siemens Aktiengesellschaft, 80333 München (DE); Fraunhofer-Gesellschaft zur Förderung der angewandten Forschung e.V., 80686 München (DE)
(72) Erfinder: Bentele, Stefan, 45473 Mülheim an der Ruhr (DE); Dewald, Mario, 45478 Mülheim (DE); Koch, Thorsten, 64342 Seeheim-Jugenheim (DE); Seipel, Björn, 61197 Florstadt (DE)

(57) **Zusammenfassung**

Die Erfindung betrifft eine Vorrichtung (2, 17) zum Eintreiben einer Leitschaufel (3) in eine an einem Leitschaufelträger (4) einer Turbine angeordnete, wenigstens ein Stemmelement (5) enthaltende Schaufelnut (1), aufweisend wenigstens einen in die Schaufelnut (1) einführbaren, nach einem Inchworm-Prinzip arbeitenden Linearantrieb (11, 18) mit zumindest einer linear längenveränderlichen Antriebseinheit (6) und mindestens zwei über die Antriebseinheit (6) miteinander verbundenen Klemmeinheiten (7, 19).

## Beschreibung

Die Erfindung betrifft eine Vorrichtung zum Eintreiben einer Leitschaufel in eine an einem Leitschaufelträger einer Turbine angeordnete, wenigstens ein Stemmelement enthaltende Schaufelnut.

Eine Turbine, insbesondere Dampf- oder Gasturbine, weist üblicherweise eine in einem Gehäuse der Turbine angeordnete Leitschaufelvorrichtung auf, mit der ein Antriebsfluid in einem optimalen Winkel auf Laufschaufeln der Turbine geleitet werden kann. Eine solche Leitschaufelvorrichtung umfasst einen Leitschaufelträger und eine Vielzahl von an dem Leitschaufelträger befestigten Leitschaufeln.

Eine Leitschaufel wird üblicherweise händisch an einem Leitschaufelträger befestigt. Hierbei wird ein Leitschaufelfuß in eine an einem Leitschaufelträger vorhandene Schaufelnut eingefügt, bis die Leitschaufel ihre bestimmungsgemäße Position relativ zu dem Leitschaufelträger eingenommen hat. Eine bestimmungsgemäße Position der Leitschaufel relativ zu dem Leitschaufelträger wird herkömmlich mittels eines Stemmelementes gesichert, welches hierzu verformt wird. Anschließend kann eine Kopplung der an einem Leitschaufelträger befestigten Leitschaufeln über ein Deckband erfolgen.

Ein Stemmelement kann in eine Schaufelnut eingetrieben werden, nachdem ein Leitschaufelfuß bestimmungsgemäß in der Schaufelnut angeordnet worden ist. Es hat sich jedoch gezeigt, dass eine Leitschaufelvorrichtung zeitsparender und somit kostengünstiger herstellbar ist, wenn zuerst ein Stemmelement in einer Schaufelnut an einem Leitschaufelträger angeordnet und anschließend ein Leitschaufelfuß in die Schaufelnut eingetrieben wird. Letztere Herstellungsweise einer Leitschaufelvorrichtung ist im Rahmen der Erfindung bevorzugt.

Zur entsprechenden Befestigung einer Leitschaufel an einem Leitschaufelträger wird die Leitschaufel herkömmlich wenig ergonomisch mit Hammerschlägen über ein Stemmelement getrieben. Dies ist mit einem hohen manuellen Kraftaufwand und einer schnellen Ermüdung eines mit der Leitschaufelbefestigung beschäftigten Personals verbunden, so dass in der Regel eine Erholungszeit von fünfzehn Minuten pro Arbeitsstunde für das Personal eingeplant werden muss. Üblicherweise sind bei einer Produktion von Leitschaufelvorrichtungen von einem Personal im Jahr bis zu 100.000 Leitschaufeln entsprechend an Leitschaufelträgern zu befestigen, was herkömmlich mit einem signifikanten Arbeits- und Zeitaufwand verbunden ist.

Zusätzlich muss das Personal während einer Befestigung einer Leitschaufel an einem Leitschaufelträger entscheiden, ob ein Leitschaufelfuß einer Leitschaufel zu leicht oder zu stramm in eine an einem Leitschaufelträger ausgebildete Schaufelnut gleitet. Ersteres erfordert einen Austausch des in der Schaufelnut vorhandenen Stemmelementes gegen ein dickeres Stemmelement, letzteres einen Austausch des in der Schaufelnut vorhandenen Stemmelementes gegen ein dünneres Stemmelement. Durch zu locker in einen Leitschaufelträger eingebaute Leitschaufeln könnte sich im Betrieb einer Leitschaufelvorrichtung der aus den an dem Leitschaufelträger angeordneten Leitschaufeln gebildete Leitschaufelverbund lösen, wodurch es zu einem Schaufelabriss kommen kann. Bei zu stramm eingebauten Leitschaufeln könnte ein Leitschaufelfuß einer Leitschaufel eine an dem Leitschaufelträger ausgebildete Schaufelnut und eine Anlagefläche an dem Leitschaufelträger beschädigen.

Aufgabe der Erfindung ist es, eine neue Möglichkeit zur Befestigung von Leitschaufeln an einem Leitschaufelträger zu schaffen, mit der eine solche Befestigung ergonomischer und unter einem geringeren Kraftaufwand erfolgen kann.

Die erfindungsgemäße Vorrichtung zum Eintreiben einer Leitschaufel in eine an einem Leitschaufelträger einer Turbine angeordnete, wenigstens ein Stemmelement enthaltende Schaufelnut umfasst wenigstens einen in die Schaufelnut einführbaren, nach einem Inchworm-Prinzip arbeitenden Linearantrieb mit zumindest einer linear längenveränderlichen Antriebseinheit und mindestens zwei über die Antriebseinheit miteinander verbundenen Klemmeinheiten.

Mittels der erfindungsgemäßen Vorrichtung muss ein mit dem Eintreiben einer Leitschaufel in eine mit einem Stemmelement versehenen Schaufelnut an einem Leitschaufelträger beschäftigtes Personal keine manuellen Hammerschläge ausführen, so dass dieses Eintreiben der Leitschaufel unter deutlich geringerem Kraftaufwand und ergonomischer erfolgen kann. Das Eintreiben einer Leitschaufel in eine mit einem Stemmelement versehene Schaufelnut an einem Leitschaufelträger ist mittels der erfindungsgemäßen Vorrichtung automatisiert und von dieser nahezu selbsttätig durchführbar.

Dem Inchworm-Prinzip liegt als biologisches Vorbild die Fortbewegung einer Raupe zu Grunde. Ein nach dem Inchworm-Prinzip arbeitender Linearantrieb ist beispielsweise aus DE 101 18 456 A1 bekannt. Allgemein ist das Inchworm-Prinzip auch aus US 3,902,084 A und US 3,902,085 A bekannt.

Ein nach dem Inchworm-Prinzip arbeitender Linearantrieb umfasst üblicherweise zwei Klemmeinheiten, welche über eine linear längenveränderliche Antriebseinheit miteinander verbunden sind. Jede der beiden Klemmeinheiten ist dazu eingerichtet, sich in einem Rohr oder dergleichen festzuklemmen. Die Bewegung des Linearantriebs kann dadurch erfolgen, dass eine der Klemmeinheit festgeklemmt wird, während die linear längenveränderliche Antriebseinheit durch eine Vergrößerung ihrer Länge die nicht festgeklemmte andere Klemmeinheit in linearer Richtung bewegt. Anschließend wird die zuletzt bewegte Klemmeinheit festgeklemmt, während die bisher festgeklemmte Klemmeinheit gelöst wird. Durch ein Zusammenziehen der linear längenveränderlichen Antriebseinheit wird die zuletzt gelöste Klemmeinheit in Richtung der nun festgeklemmten Klemmeinheit gezogen. Dieser Ablauf kann sich dann beliebig oft wiederholen. So entsteht eine Bewegung, welche an die Fortbewegung einer Raupe erinnert.

Die Turbine kann beispielsweise als Dampfturbine oder als Gasturbine ausgebildet sein.

Bevorzugt weist die Antriebseinheit wenigstens ein Piezoelement auf. Das Piezoelement kann als Stapel aus dünnen Piezoplättchen, insbesondere Piezokristall- oder Piezokeramikplättchen, ausgebildet sein, bei dem die einzelnen Piezoplättchen durch je eine elektrisch leitende Schicht voneinander getrennt sind. Wird zwischen je zwei aufeinanderfolgenden elektrisch leitenden Schichten eine elektrische Spannung angelegt, dehnt sich der Stapel aus Piezoplättchen bei entsprechender Orientierung des Piezomaterials beispielsweise in Längsrichtung. Die erzielbare Dehnung des Piezomaterials ist bezogen auf dessen entsprechende Abmessung zwar relativ gering, jedoch ist die mittels eines Stapels aus Piezoplättchen erzeugbare Kraft im Verhältnis zu deren Größe relativ hoch. Die Antriebseinheit kann auch zwei oder mehrere, insbesondere parallel oder in Reihe geschaltete, Piezoelemente aufweisen.

Bevorzugt weist wenigstens eine Klemmeinheit zumindest eine mechanische Feder auf, die derart ausgebildet ist, dass sie bei in einer Einführrichtung in die Schaufelnut eingeführtem Linearantrieb durch einen körperlichen Kontakt mit der Schaufelnut entgegen der Einführrichtung unter Erzeugung einer Rückstellkraft um ein vorgegebenes Ausmaß elastisch verformt ist. Durch die Verformung der mechanischen Feder innerhalb der Schaufelnut werden Randabschnitte mittels der Rückstellkraft gegen die Innenseite der Schaufelnut gedrückt, wodurch die Haftreibung zwischen der mechanischen Feder und der Innenseite erhöht wird. An der mechanischen Feder bzw. deren Randabschnitten können zur Herstellung einer Haftreibung gewünschter Größenordnung geeignete Kontaktflächen ausgebildet sein. Die Verformung der mechanischen Feder innerhalb der Schaufelnut hat zudem den Vorteil, dass die mechanische Feder in der Einführrichtung leichter innerhalb der Schaufelnut verschoben werden kann als entgegen der Einführrichtung, was die Richtung einer möglichen Fortbewegung des Linearantriebs innerhalb der Schaufelnut definiert. Die Klemmeinheit kann auch zwei oder mehrere entsprechende mechanische Federn aufweisen. Es können auch beide Klemmeinheiten jeweils zumindest eine entsprechende mechanische Feder aufweisen.

Bevorzugt weist wenigstens eine Klemmeinheit zumindest ein Piezoelement auf. Über eine Betätigung des Piezoelementes kann die Klemmeinheit in der Schaufelnut festgeklemmt und wieder gelöst werden. Das Piezoelement kann als Stapel aus dünnen Piezoplättchen, insbesondere Piezokristall- oder Piezokeramikplättchen, ausgebildet sein, bei dem die einzelnen Piezoplättchen durch je eine elektrisch leitende Schicht voneinander getrennt sind. Die Klemmeinheit kann auch zwei oder mehrere, insbesondere parallel oder in Reihe geschaltete, Piezoelemente aufweisen. Es können auch beide Klemmeinheiten jeweils zumindest ein entsprechendes Piezoelement aufweisen. Dies hat den Vorteil, dass die Vorrichtung entlang der Schaufelnut wahlweise in entgegengesetzte Richtungen bewegt werden kann.

Die Vorrichtung umfasst bevorzugt wenigstens eine zum Ansteuern der Antriebseinheit und/oder von zumindest einer Klemmeinheit eingerichtete Ansteuerelektronik. Die Ansteuerelektronik kann einen Mikroprozessor aufweisen. Die Ansteuerelektronik steuert die Antriebseinheit und/oder die wenigstens eine Klemmeinheit derart an, dass sich die Vorrichtung entlang der Schaufelnut bewegen kann. Eine entsprechende Ansteuerung einer Klemmeinheit kann insbesondere bei einer mit wenigstens einem Piezoelement ausgestatteten Klemmeinheit vorgenommen werden.

Die Vorrichtung umfasst bevorzugt wenigstens eine zum Erfassen einer jeweilig mit der Vorrichtung erreichten Einbaukraft der einzutreibenden Leitschaufel eingerichtete Sensoreinheit und wenigstens eine kommunikationstechnisch mit der Sensoreinheit verbundene, zum Signalisieren der mit der Sensoreinheit jeweilig erfassten Einbaukraft der einzutreibenden Leitschaufel eingerichtete Signalisierungseinheit. Die Sensoreinheit kann zum Erfassen der jeweilig mit der Vorrichtung erreichten Einbaukraft der einzutreibenden Leitschaufel irgendein geeignetes Sensormittel aufweisen.

Die Sensoreinheit ist bevorzugt eingerichtet, eine durch eine mit der Antriebseinheit ausgeführte einzelne Vorschubbewegung erzeugte Auslenkung einer nächstliegend zu der einzutreibenden Leitschaufel angeordneten Klemmeinheit zu erfassen. Die Sensorsignale der Sensoreinheit können an eine Auswertungselektronik gesendet werden, welche einen Abgleich der erfassten Auslenkung der Klemmeinheit mit vorgegebenen, beispielsweise erfahrungsgemäßen, Grenzwerten vornimmt, woraus geschlossen werden kann, ob die jeweilige Einbaukraft einer einzutreibenden Leitschaufel nach einer einzelnen Vorschubbewegung der Vorrichtung zu gering, zu groß oder optimal ist.

Die Signalisierungseinheit ist bevorzugt zur optischen Signalisierung und/oder zur akustischen Signalisierung der jeweiligen Einbaukraft der einzutreibenden Leitschaufel eingerichtet. Die Signalisierungseinheit kann kommunikationstechnisch unmittelbar oder über eine weitere elektronische Einheit mit der Sensoreinheit verbunden sein, um von der Sensoreinheit Signale empfangen und der jeweiligen Einbaukraft der einzutreibenden Leitschaufel entsprechende Signale erzeugen und ausgeben zu können. Durch die Erfassung der jeweilig mit einer einzelnen Vorschubbewegung der Vorrichtung erreichten Einbaukraft der einzutreibenden Leitschaufel mittels der Sensoreinheit und die entsprechende Signalisierung dieser Einbaukraft mittels der Signalisierungseinheit kann das mit dem Eintreiben der Leitschaufel befasste Personal eine Rückmeldung erhalten, auf deren Basis das Personal beurteilen kann, ob die eingetriebene Leitschaufel zu leicht, optimal oder zu stramm in die an einem Leitschaufelträger ausgebildete Schaufelnut gleitet, um die mit einem zu leichten und einem zu strammen Einbau einer Leitschaufel verbundenen, oben genannten Nachteile vermeiden zu können. Zur optischen Signalisierung der Einbaukraft der einzutreibenden Leitschaufel kann die Signalisierungseinheit eine optische Anzeige aufweisen, welche zur alphanumerischen, farblichen und/oder symbolischen Darstellung eines der jeweiligen Einbaukraft der einzutreibenden Leitschaufel entsprechenden Signals eingerichtet ist. Zur akustischen Signalisierung der Einbaukraft der einzutreibenden Leitschaufel kann die Signalisierungseinheit einen Lautsprecher aufweisen, welcher ein der jeweiligen Einbaukraft der einzutreibenden Leitschaufel entsprechendes akustisches Signal ausgibt.

Die Vorrichtung umfasst bevorzugt wenigstens eine kommunikationstechnisch mit der Sensoreinheit und der Ansteuerelektronik verbundene, zum Auswerten der jeweilig mit der Sensoreinheit erfassten Einbaukraft der einzutreibenden Leitschaufel eingerichtete Auswertungselektronik, die eingerichtet ist, den Linearantrieb abzuschalten, wenn die jeweilig erfasste Einbaukraft der einzutreibenden Leitschaufel einen vorgegebenen Grenzwert erreicht. Die Auswertungselektronik ist kommunikationstechnisch mit der Sensoreinheit verbunden, um die jeweilig von der Sensoreinheit erfasste Einbaukraft der einzutreibenden Leitschaufel empfangen und zur Ansteuerung der Ansteuerelektronik auswerten zu können, wobei die Auswertungselektronik kommunikationstechnisch mit der Ansteuerelektronik verbunden ist. Hierzu kann die Auswertungselektronik einen Mikroprozessor und wenigstens eine Speichereinheit aufweisen.

Die Vorrichtung umfasst bevorzugt wenigstens einen an einer der einzutreibenden Leitschaufel zugewandten Seite der nächstliegend zu der einzutreibenden Leitschaufel angeordneten Klemmeinheit anordbaren Treibkörper. Hierdurch wird ein unmittelbarer körperlicher Kontakt zwischen dieser Klemmeinheit und der Leitschaufel vermieden, was die Klemmeinheit schont. Der Treibkörper kann zumindest teilweise aus Kupfer gebildet sein.

Im Folgenden werden bevorzugte Ausführungsformen der erfindungsgemäßen Vorrichtung anhand der beigefügten schematischen Zeichnungen erläutert. Es zeigen:
- Fig. 1: eine schematische Darstellung eines Ausführungsbeispiels für eine in eine Schaufelnut eingeführte erfindungsgemäße Vorrichtung,
- Fig. 2: eine schematische Darstellung eines Bewegungszustands der in Figur 1 gezeigten Vorrichtung,
- Fig. 3: eine schematische Darstellung eines weiteren Bewegungszustands der in Figur 1 gezeigten Vorrichtung,
- Fig. 4: eine schematische Darstellung eines weiteren Ausführungsbeispiels für eine in eine Schaufelnut eingeführte erfindungsgemäße Vorrichtung,
- Fig. 5: eine schematische Darstellung eines Bewegungszustands der in Figur 4 gezeigten Vorrichtung, und
- Fig. 6: eine schematische Darstellung eines weiteren Bewegungszustands der in Figur 4 gezeigten Vorrichtung.

In den Figuren sind gleiche Bauteile mit denselben Bezugszeichen versehen.

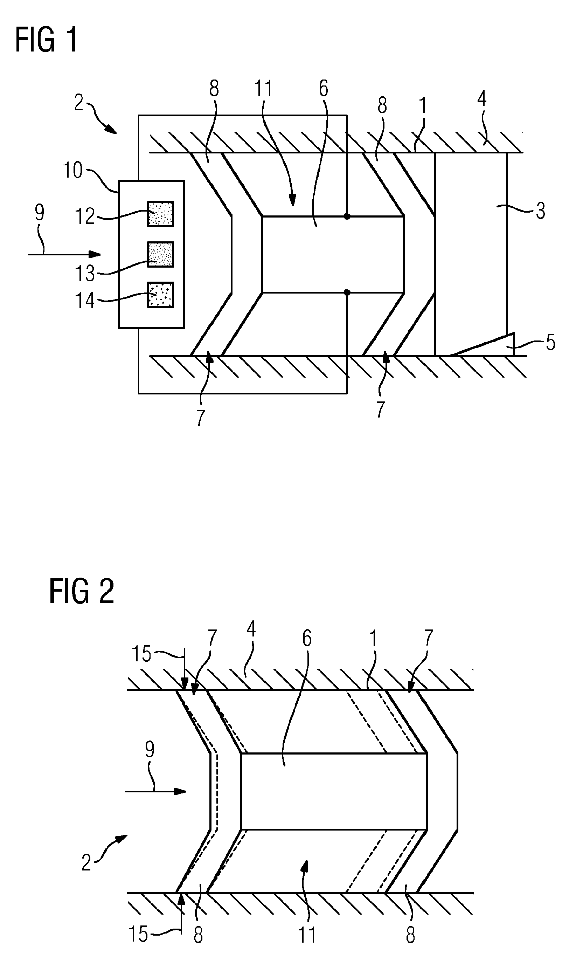

Figur 1 zeigt eine schematische Darstellung eines Ausführungsbeispiels für eine in eine Schaufelnut 1 eingeführte erfindungsgemäße Vorrichtung 2 zum Eintreiben einer Leitschaufel 3 in die an einem Leitschaufelträger 4 einer Turbine angeordnete, wenigstens ein Stemmelement 5 enthaltende Schaufelnut 1. Die Vorrichtung 2 umfasst einen in die Schaufelnut 1 eingeführten, nach einem Inchworm-Prinzip arbeitenden Linearantrieb 11 mit einer linear längenveränderlichen Antriebseinheit 6 und zwei über die Antriebseinheit 6 miteinander verbundenen Klemmeinheiten 7. Die Antriebseinheit 6 weist wenigstens ein nicht gezeigtes Piezoelement auf.

Jede Klemmeinheit 7 weist eine mechanische Feder 8 auf, die derart ausgebildet ist, dass sie bei in einer Einführrichtung gemäß dem Pfeil 9 in die Schaufelnut 1 eingeführtem Linearantrieb 11 durch einen körperlichen Kontakt mit der Schaufelnut 1 entgegen der Einführrichtung unter Erzeugung einer Rückstellkraft um ein vorgegebenes Ausmaß elastisch verformt ist, wie es in Figur 1 gezeigt ist. Die mechanischen Federn 8 können beispielsweise als Tellerfedern ausgebildet sein.

Die Vorrichtung 2 umfasst des Weiteren wenigstens eine zum Ansteuern der Antriebseinheit 6 eingerichtete, nicht näher dargestellte Ansteuerelektronik.

Des Weiteren umfasst die Vorrichtung 2 wenigstens eine zum Erfassen einer jeweilig mit der Vorrichtung 2 erreichten Einbaukraft der einzutreibenden Leitschaufel 3 eingerichtete, nicht näher dargestellte Sensoreinheit und wenigstens eine kommunikationstechnisch mit der Sensoreinheit verbundene, zum Signalisieren der mit der Sensoreinheit jeweilig erfassten Einbaukraft der einzutreibenden Leitschaufel eingerichtete Signalisierungseinheit 10. Die Sensoreinheit ist eingerichtet, eine durch eine mit der Antriebseinheit 6 ausgeführte einzelne Vorschubbewegung erzeugte Auslenkung einer nächstliegend zu der einzutreibenden Leitschaufel 3 angeordneten Klemmeinheit 7 zu erfassen. Die Signalisierungseinheit 10 ist separat von dem Linearantrieb 11 angeordnet und zur optischen Signalisierung der jeweiligen Einbaukraft der einzutreibenden Leitschaufel 3 eingerichtet. Hierzu umfasst die Signalisierungseinheit 10 drei Anzeigefelder 12, 13 und 14, welche sich in ihren jeweiligen Farben voneinander unterscheiden. Das Anzeigefeld 12 hat eine rote Farbe, das Anzeigefeld 13 eine gelbe Farbe und das Anzeigefeld 14 eine grüne Farbe. Leuchtet das Anzeigefeld 14 auf, wird einem mit dem Eintreiben der Leitschaufel 3 befassten Personal angezeigt, dass die Leitschaufel 3 mit einer optimalen Einbaukraft eingebaut worden ist.

Die Vorrichtung 2 umfasst des Weiteren eine kommunikationstechnisch mit der Sensoreinheit und der Ansteuerelektronik verbundene, zum Auswerten der jeweilig mit der Sensoreinheit erfassten Einbaukraft der einzutreibenden Leitschaufel 3 eingerichtete, nicht gezeigte Auswertungselektronik, die eingerichtet ist, den Linearantrieb 11 abzuschalten, wenn die jeweilig erfasste Einbaukraft der einzutreibenden Leitschaufel 3 einen vorgegebenen Grenzwert erreicht.

Ferner umfasst die Vorrichtung 2 einen an einer der einzutreibenden Leitschaufel 3 zugewandten Seite der nächstliegend zu der einzutreibenden Leitschaufel 3 angeordneten Klemmeinheit 7 anordbaren, nicht gezeigten Treibkörper.

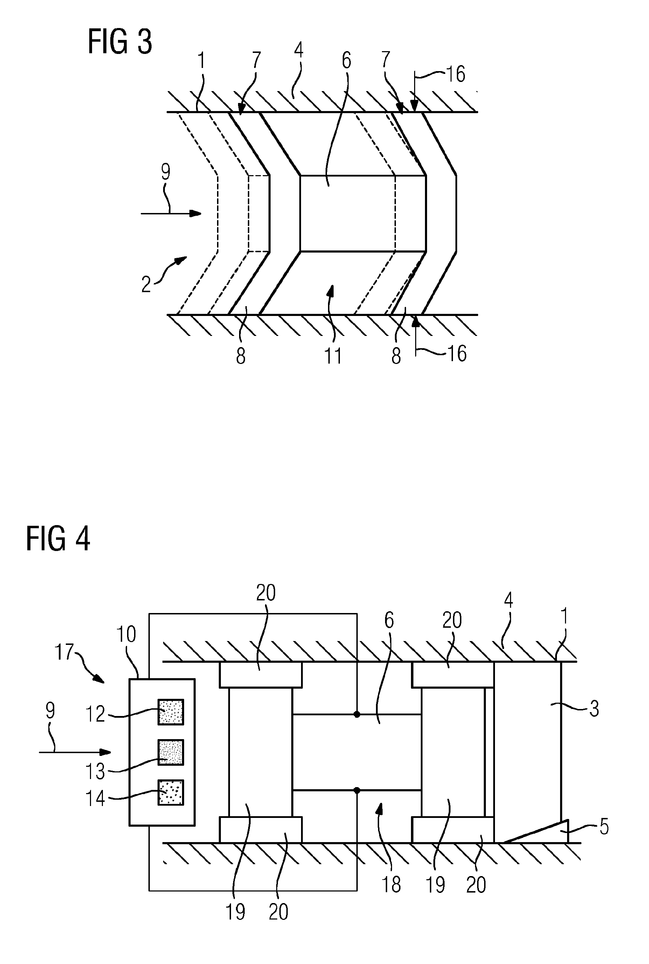

Figur 2 zeigt eine schematische Darstellung eines Bewegungszustands der in Figur 1 gezeigten Vorrichtung 2. Ausgehend von dem in Figur 1 gezeigten Ausgangszustand, welcher in den Figuren 2 und 3 durch gestrichelte Linien angedeutet ist, wurde dieser Bewegungszustand dadurch erreicht, dass sich die Antriebseinheit 6 linear ausgedehnt hat, was durch eine entsprechende Ansteuerung durch die Ansteuerelektronik erfolgt ist. Hierdurch wurde die rechts dargestellte Klemmeinheit 7 innerhalb der Schaufelnut 1 nach rechts verlagert. Hierbei stützt sich die Antriebseinheit 6 mittig an der links dargestellten Klemmeinheit 7 ab, wodurch diese Klemmeinheit 7 bzw. deren mechanische Feder 8 verformt wird. Durch diese Verformung wird der Anpressdruck zwischen der mechanischen Feder 8 und der Innenseite der Schaufelnut 1 erhöht, was mit einer entsprechenden Erhöhung der zwischen der mechanischen Feder 8 und der Innenseite der Schaufelnut 1 gegebenen Haftreibung bzw. einer Erhöhung der durch die Pfeile 15 angedeuteten Klemmkraft einhergeht.

Figur 3 zeigt eine schematische Darstellung eines weiteren Bewegungszustands der in Figur 1 gezeigten Vorrichtung 2.

Ausgehend von dem in Figur 2 gezeigten Bewegungszustand wurde dieser weitere Bewegungszustand dadurch erreicht, dass sich die Antriebseinheit 6 linear zusammengezogen hat, was durch eine entsprechende Ansteuerung durch die Ansteuerelektronik erfolgt ist. Hierdurch wurde die links dargestellte Klemmeinheit 7 zur Reduzierung der zwischen ihr und der Innenseite der Schaufelnut 1 gegebenen Haftreibung entlastet und innerhalb der Schaufelnut 6 nach rechts verlagert. Hierbei zieht die Antriebseinheit 6 mittig an der rechts dargestellten Klemmeinheit 7, wodurch diese Klemmeinheit 7 bzw. deren mechanische Feder 8 verformt wird. Durch diese Verformung wird der Anpressdruck zwischen der mechanischen Feder 8 und der Innenseite der Schaufelnut 1 erhöht, was mit einer entsprechenden Erhöhung der zwischen der mechanischen Feder 8 und der Innenseite der Schaufelnut 1 gegebenen Haftreibung bzw. einer Erhöhung der durch die Pfeile 16 angedeuteten Klemmkraft einhergeht. Die in den Figuren 2 und 3 erfolgenden Änderungen der Länge der Antriebseinheit 6 können beliebig oft wiederholt werden, um ein Fortbewegen des Linearantriebs 11 innerhalb der Schaufelnut 1 nach rechts zu ermöglichen bzw. um durch die einzelnen Vorschubbewegungen erzeugte Schläge auf die Leitschaufel 3 auszuüben.

Fig. 4 zeigt eine schematische Darstellung eines weiteren Ausführungsbeispiels für eine in eine Schaufelnut 1 eingeführte erfindungsgemäße Vorrichtung 17. Die Vorrichtung 17 unterscheidet sich dadurch von der in den Figuren 1 bis 3 gezeigten Vorrichtung 2, dass der Linearantrieb 18 statt Klemmeinheiten 7 in Form von mechanischen Federn 8 linear längenveränderliche Klemmeinheiten 19 aufweist, die jeweils zumindest ein nicht gezeigtes Piezoelement aufweisen, wobei die an den Klemmeinheiten 19 vornehmbare Längenänderung quer, insbesondere senkrecht, zu der an der Antriebseinheit vornehmbaren Längenänderung angeordnet ist. An einander gegenüberliegenden Enden von jeder Klemmeinheit 19 sind Kontaktkörper 20 angeordnet, welche zur Schaffung einer hohen Haftreibung zwischen den Klemmeinheiten und der damit in körperlichen Kontakt bringbaren Innenseite der Schaufelnut 1 dienen.

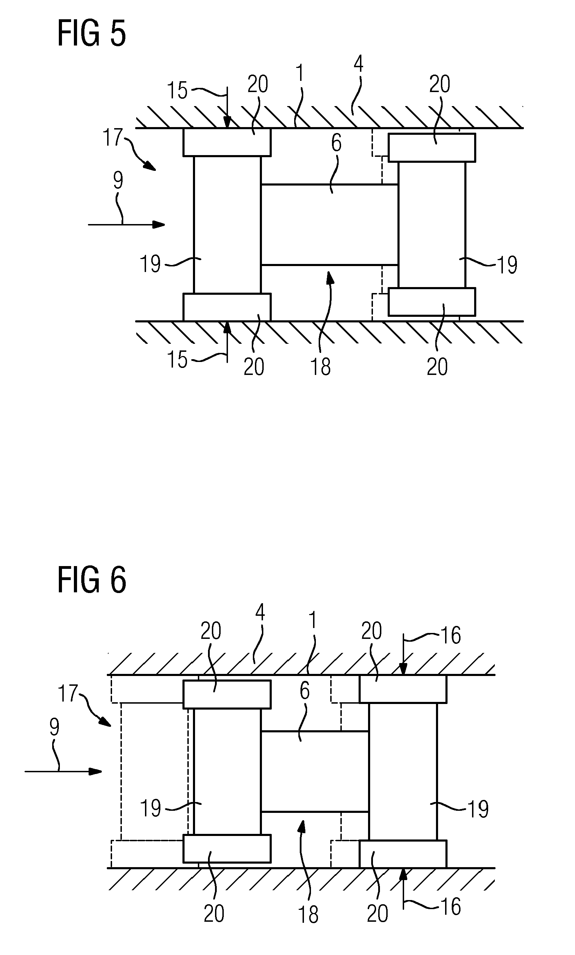

Fig. 5 zeigt eine schematische Darstellung eines Bewegungszustands der in Figur 4 gezeigten Vorrichtung 17. Ausgehend von dem in Figur 4 gezeigten Ausgangszustand, welcher in den Figuren 5 und 6 durch gestrichelte Linien angedeutet ist, wurde dieser Bewegungszustand dadurch erreicht, dass sich die Antriebseinheit 6 linear ausgedehnt hat, was durch eine entsprechende Ansteuerung durch die Ansteuerelektronik erfolgt ist. Hierdurch wurde die rechts dargestellte Klemmeinheit 19, welche zuvor mittels ihres Piezoelementes zusammengezogen worden ist, innerhalb der Schaufelnut 1 nach rechts verlagert. Hierbei stützt sich die Antriebseinheit 6 mittig an der links dargestellten Klemmeinheit 19 ab, welche zuvor mittels ihres Piezoelementes ausgedehnt und hierdurch in der Schaufelnut 1 festgeklemmt worden ist. Das Ausdehnen bzw. Zusammenziehen der Klemmeinheiten 19 ist durch eine entsprechende Ansteuerung der Klemmeinheiten 19 durch die Ansteuerelektronik erfolgt.

Fig. 6 zeigt eine schematische Darstellung eines weiteren Bewegungszustands der in Figur 4 gezeigten Vorrichtung 17. Ausgehend von dem in Figur 5 gezeigten Bewegungszustand wurde dieser weitere Bewegungszustand dadurch erreicht, dass sich die Antriebseinheit 6 linear zusammengezogen hat, was durch eine entsprechende Ansteuerung durch die Ansteuerelektronik erfolgt ist. Hierzu wurde die links dargestellte Klemmeinheit 19 zunächst mittels ihres Piezoelementes zusammengezogen und die rechts dargestellte Klemmeinheit 19 mittels ihres Piezoelementes ausgedehnt und dadurch in der Schaufelnut 1 festgeklemmt, was durch eine entsprechende Ansteuerung der Klemmeinheiten 19 durch die Ansteuerelektronik erfolgt ist. Durch das Zusammenziehen der Antriebseinheit 6 wurde anschließend die links dargestellte Klemmeinheit 19 innerhalb der Schaufelnut 6 nach rechts verlagert. Die in den Figuren 5 und 6 erfolgenden Änderungen der Länge der Antriebseinheit 6 und der Klemmeinheiten 19 können beliebig oft wiederholt werden, um ein Fortbewegen des Linearantriebs 18 innerhalb der Schaufelnut 1 nach rechts zu ermöglichen bzw. um durch die einzelnen Vorschubbewegungen erzeugte Schläge auf die einzutreibende Leitschaufel 3 auszuüben. Durch eine Umkehrung der in den Figuren 5 und 6 beschriebenen Bewegungsabläufe des Linearantriebs 18 kann der Linearantrieb 18 auch entgegen der durch den Pfeil 9 angedeuteten Einführrichtung innerhalb der Schaufelnut 1 verlagert werden.

Obwohl die Erfindung im Detail durch die vorstehenden Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (2, 17) zum Eintreiben einer Leitschaufel (3) in eine an einem Leitschaufelträger (4) einer Turbine angeordnete, wenigstens ein Stemmelement (5) enthaltende Schaufelnut (1),
aufweisend wenigstens einen in die Schaufelnut (1) einführbaren, nach einem Inchworm-Prinzip arbeitenden Linearantrieb (11, 18) mit zumindest einer linear längenveränderlichen Antriebseinheit (6) und mindestens zwei über die Antriebseinheit (6) miteinander verbundenen Klemmeinheiten (7, 19).

2. Vorrichtung (2, 17) gemäß Anspruch 1,
wobei die Antriebseinheit (6) wenigstens ein Piezoelement aufweist.

3. Vorrichtung (2, 17) gemäß Anspruch 1 oder 2,
wobei wenigstens eine Klemmeinheit (7) zumindest eine mechanische Feder (8) aufweist, die derart ausgebildet ist, dass sie bei in einer Einführrichtung (9) in die Schaufelnut (1) eingeführtem Linearantrieb (11, 18) durch einen körperlichen Kontakt mit der Schaufelnut (1) entgegen der Einführrichtung (9) unter Erzeugung einer Rückstellkraft um ein vorgegebenes Ausmaß elastisch verformt ist.

4. Vorrichtung (2, 17) gemäß einem der Ansprüche 1 bis 3,
wobei wenigstens eine Klemmeinheit (19) zumindest ein Piezoelement aufweist.

5. Vorrichtung (2, 17) gemäß einem der Ansprüche 1 bis 4, aufweisend wenigstens eine zum Ansteuern der Antriebseinheit (6) und/oder von zumindest einer Klemmeinheit (19) eingerichtete Ansteuerelektronik.

6. Vorrichtung (2, 17) gemäß einem der Ansprüche 1 bis 5, aufweisend wenigstens eine zum Erfassen einer jeweilig mit der Vorrichtung (2, 17) erreichten Einbaukraft der einzutreibenden Leitschaufel (3) eingerichtete Sensoreinheit und wenigstens eine kommunikationstechnisch mit der Sensoreinheit verbundene, zum Signalisieren der mit der Sensoreinheit jeweilig erfassten Einbaukraft der einzutreibenden Leitschaufel (3) eingerichtete Signalisierungseinheit (10).

7. Vorrichtung (2, 17) gemäß Anspruch 6,
wobei die Sensoreinheit eingerichtet ist, eine durch eine mit der Antriebseinheit (6) ausgeführte einzelne Vorschubbewegung erzeugte Auslenkung einer nächstliegend zu der einzutreibenden Leitschaufel (3) angeordneten Klemmeinheit (7, 19) zu erfassen.

8. Vorrichtung (2, 17) gemäß Anspruch 6 oder 7,
wobei die Signalisierungseinheit (10) zur optischen Signalisierung und/oder zur akustischen Signalisierung der jeweiligen Einbaukraft der einzutreibenden Leitschaufel (3) eingerichtet ist.

9. Vorrichtung (2, 17) gemäß einem der Ansprüche 6 bis 8, aufweisend wenigstens eine kommunikationstechnisch mit der Sensoreinheit und der Ansteuerelektronik verbundene, zum Auswerten der jeweilig mit der Sensoreinheit erfassten Einbaukraft der einzutreibenden Leitschaufel (3) eingerichtete Auswertungselektronik, die eingerichtet ist, den Linearantrieb (11, 18) abzuschalten, wenn die jeweilig erfasste Einbaukraft der einzutreibenden Leitschaufel (3) einen vorgegebenen Grenzwert erreicht.

10. Vorrichtung (2, 17) gemäß einem der Ansprüche 1 bis 9, aufweisend wenigstens einen an einer der einzutreibenden Leitschaufel (3) zugewandten Seite der nächstliegend zu der einzutreibenden Leitschaufel (3) angeordneten Klemmeinheit (7, 19) anordbaren Treibkörper.
